# EUROPEAN PATENT APPLICATION

(11) **EP 4 583 128 A1**
(43) Date of publication of application: **09.07.2025**
(21) Application number: 23858979.0
(22) Date of filing: 21.07.2023
(51) Int. Cl.: H01B 11/06

(54) **CHARGING GUN CABLE, CHARGING GUN, AND CHARGING PILE**

(30) Priority: 30.08.2022 CN 202222297996 U
(71) Applicant: BYD Company Limited, Shenzhen, Guangdong 518118 (CN)
(72) Inventor: WU, Chaoshuai, Shenzhen, Guangdong 518118 (CN)
(74) Representative: Mathys & Squire
(86) International application number: PCT/CN2023/108509
(87) International publication number: WO 2024/045943

(57) **Abstract**

A charging gun cable, comprising a first L line (11), an N line (14), a PE line (12) and a CP line (13), wherein the PE line (12) is provided with a hollow hole, the CP line (13) is located in the hollow hole of the PE line (12), and the first L line (11), the N line (14) and the PE line (12) are arranged pairwise.

## Description

### CROSS-REFERENCE TO RELATED APPLICATIONS

The present disclosure claims priority to Chinese Patent Application No. 202222297996.X, filed on August 30, 2022 and entitled "CHARGING GUN CABLE, CHARGING GUN, AND CHARGING PILE". The entire content of the above-referenced application is incorporated herein by reference.

### FIELD

The present disclosure relates to a charging gun cable, a charging gun, and a charging pile.

### BACKGROUND

The existing charging gun is provided with a CP wire. During operation of the charging gun, signal transmission in the CP wire is susceptible to interference. Since the CP wire is crucial for alternating current (AC) charging, interference with the CP wire affects normal charging, resulting in a failure of charging start or abnormal stop during charging.

### SUMMARY

An object of the present disclosure is to provide a charging gun cable, a charging gun, and a charging pile, so as to resolve a problem of a failure of charging start or abnormal stop during charging as a result of a CP wire of the charging gun being interfered in the related art.

According to a first aspect of the present disclosure, a charging gun cable is provided. The charging gun cable includes
a first L wire,
an N wire,
a PE wire, and a CP wire. The PE wire is provided with a hollow hole.

The CP wire is located in the hollow hole of the PE wire.

The first L wire, the N wire, and the PE wire are arranged adjacent to each other in pairs.

Further, the PE wire is a shielding layer of the CP wire.

Further, the PE wire is a metal layer that wraps the CP wire.

Further, the CP wire and the PE wire are coaxially arranged.

Further, the CP wire extends through the hole on the PE wire and connects to a controller in the charging pile.

Further, the charging gun cable further includes
a second L wire, and
a third L wire.

The first L wire, the second L wire, the third L wire, the N wire, and the PE wire are arranged adjacent to each other in sequence.

According to a second aspect of the present disclosure, a charging gun is provided, including a charging gun body, and
a charging gun head. The charging gun head includes the charging gun cable described in the first aspect.

According to a third aspect of the present disclosure, a charging pile is provided, including a charging pile body and the charging gun provided in the second aspect.

Further, the charging pile is a single-phase charging pile, and the charging pile body includes:
a switching device and a controller. The switching device is configured to connect the first L wire and the N wire.

A communication terminal of the controller is connected to the CP wire. A ground terminal of the controller is connected to the PE wire.

Further, the charging pile is a three-phase charging pile. The charging pile body includes
a switching device and a controller. The switching device is configured to connect the first L wire, a second L wire, a third L wire, and the N wire.

A communication terminal of the controller is connected to the CP wire. A ground terminal of the controller is connected to the PE wire.

The present disclosure provides a charging gun cable, a charging gun, and a charging pile. The charging gun cable includes a first L wire, an N wire, a PE wire, and a CP wire. The PE wire is provided with a hollow hole, and the CP wire is located in the hollow hole of the PE wire. According to the present disclosure, the CP wire is arranged in the hollow hole of the PE wire, so that the PE wire not only realizes the grounding function, but also shields the CP wire. The PE wire is reused as the shielding wire, to prevent the CP wire from being interfered when transmitting a signal. In addition, the PE wire with the same original wire diameter is used as the shielding wire, so that the function of the original PE wire is not affected, which resolves the problem of the failure of charging start or abnormal stop during charging as a result of the CP wire of the charging gun being interfered in the related art.

### BRIEF DESCRIPTION OF THE DRAWINGS

To describe the technical solutions of embodiments of the present disclosure more clearly, the following briefly introduces the accompanying drawings required for describing the embodiments or the related art. Apparently, the accompanying drawings in the following description show only some embodiments of the present disclosure, and a person of ordinary skill in the art may still derive other drawings from these accompanying drawings without creative efforts.
FIG. 1 is a schematic structural diagram of a charging gun cable according to Embodiment I of the present disclosure;
FIG. 2 is another schematic structural diagram of a charging gun cable according to Embodiment I of the present disclosure; and
FIG. 3 is a schematic structural diagram of a charging pile according to Embodiment III of the present disclosure.

### DETAILED DESCRIPTION

To make the objectives, technical solutions, and advantages of the present disclosure clearer, the following further describes the present disclosure in detail with reference to the accompanying drawings and the embodiments. It should be understood that specific embodiments described herein are merely used to explain the present disclosure and are not intended to limit the present disclosure.

Unless otherwise defined, a technical term or a scientific term used in the present disclosure is to have a general meaning understood by a person of ordinary skill in the art of the present disclosure. A similar term such as "include" or "comprise" used in the present disclosure means that an element or object appearing before the term covers an element or object listed after the term and equivalents thereof, but do not exclude other elements or objects. Similar terms such as "connection" or "connected" are not limited to a physical or mechanical connection, but may also include an electrical connection, whether direct or indirect. Terms such as "up", "down", "left", and "right" are only used to indicate a relative positional relationship. When an absolute position of the described object changes, the relative positional relationship may also change accordingly.

To keep the following description of the embodiments of the present disclosure clear and concise, detailed descriptions of known functions and known components are omitted in the present disclosure.

To describe the technical solutions of the present disclosure, a description is provided through specific embodiments below.

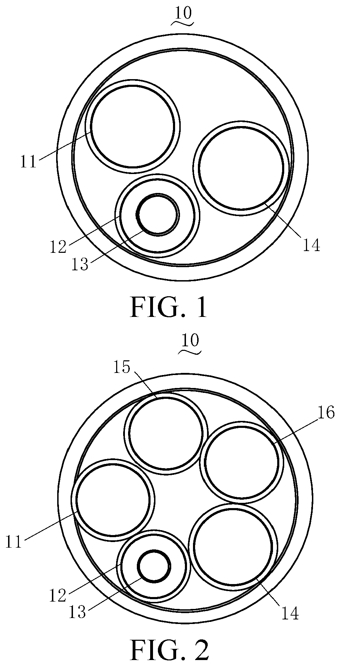

Embodiment I of the present disclosure provides a charging gun cable 10. As shown in FIG. 1, the charging gun cable 10 includes a first L wire 11, an N wire 14, a PE wire 12, and a CP wire 13. The first L wire 11, the N wire 14, and the PE wire 12 are arranged adjacent to each other in pairs. The PE wire 12 is provided with a hollow hole. The CP wire 13 is located in the hollow hole of the PE wire 12.

The first L wire 11 refers to a single-phase alternating current (AC) wire. The N wire 14 refers to an AC neutral wire. The PE wire 12 refers to an earth wire on the charging gun configured to connect the charging gun and a vehicle to a common ground. The CP wire 13 refers to a control guide cable for monitoring an interaction function between an electric vehicle and an electric vehicle power supply device.

The PE wire 12 being provided with a hollow hole means that the PE wire 12 is a hollow wire, the middle of a wire harness is hollow, and the CP wire 13 is located in the hollow hole of the PE wire 12, so that the PE wire 12 forms a shielding layer of the CP wire 13.

The present disclosure provides a charging gun cable 10. The charging gun cable 10 includes a first L wire 11, an N wire 14, a PE wire 12, and a CP wire 13. The PE wire 12 is provided with a hollow hole, and the CP wire 13 is located in the hollow hole of the PE wire 12. According to the present disclosure, the CP wire 13 is arranged in the hollow hole of the PE wire 12, so that the PE wire 12 not only realizes the grounding function, but also shields the CP wire 13. The PE wire 12 is reused as the shielding wire, to prevent the CP wire 13 from being interfered when transmitting a signal. In addition, the PE wire 12 with the same original wire diameter is used as the shielding wire, so that the function of the original PE wire 12 is not affected.

Regarding a positional relationship between the PE wire 12 and the CP wire 13, the CP wire 13 is located inside the PE wire 12, and an outer surface of the CP wire 13 may partially contact an inner surface of the PE wire 12, or may completely contact the inner surface of the PE wire 12. As an implementation, the PE wire 12 is a metal layer that wraps the CP wire 13. Preferably, The CP wire 13 and the PE wire 12 are coaxially arranged, and the technical effect of this implementation is that the PE wire 12 tightly wraps the CP wire 13, thereby improving a shielding effect on the CP wire 13.

For a connection relationship between the CP wire 13 and another module, the CP wire 13 extends through the hole on the PE wire 12 and connects to the controller in the charging pile. A hole is provided on the PE wire 12 near the controller inside the charging pile for the CP wire 13 to pass through, so as to realize the connection between the CP wire 13 and another module.

Regarding a category of the charging gun cable 10, as shown in FIG. 1, when the category of the charging gun cable 10 is a single-phase AC charging cable, the charging gun cable includes only the first L wire 11. As shown in FIG. 2, when the category of the charging gun cable 10 is a three-phase AC charging cable, the charging gun cable 10 further includes a second L wire 15 and a third L wire 16. The first L wire 11, the second L wire 15, the third L wire 16, the N wire 14, and the PE wire 12 are arranged adjacent to each other in sequence. One arrangement manner is that the first L wire 11, the second L wire 15, the third L wire 16, the N wire 14, and the PE wire 12 form a ring. Another arrangement manner is a double-row arrangement, in which the first L wire 11, the second L wire 15, and the third L wire 16 are located in a first row, and the N wire 14 and the PE wire 12 are located in a second row. The charging gun cable 10 provided in this embodiment may be used as both a single-phase AC charging cable and a three-phase AC charging cable.

Embodiment II of the present disclosure provides a charging gun, including a charging gun body and a charging gun head. The charging gun head includes the charging gun cable provided in Embodiment I. The charging gun cable extends through the charging gun body and connects to the charging pile.

Embodiment III of the present disclosure provides a charging pile, including a charging pile body 30 and the charging gun 20 provided in Embodiment II.

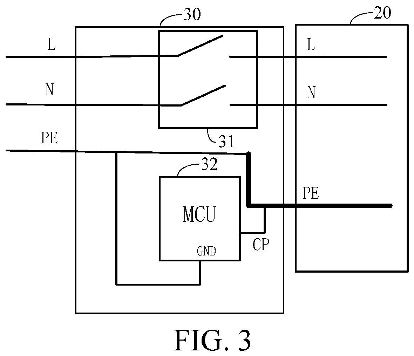

As an implementation, as shown in FIG. 3, the charging pile is a single-phase charging pile, and the charging pile body 30 includes a switching device 31 and a controller 32. The switching device 31 connects a first L wire to an N wire. A communication terminal of the controller 32 is connected to a CP wire, and a ground terminal of the controller 32 is connected to a PE wire.

In this implementation, in the single-phase charging pile, the CP wire is arranged in a hollow hole of the PE wire, so that the PE wire not only realizes the grounding function, but also shields the CP wire. The PE wire is reused as a shielding wire, to prevent the CP wire from being interfered when transmitting a signal.

As another implementation, the charging pile is a three-phase charging pile. The charging pile body includes a switching device and a controller. The switching device connects the first L wire, a second L wire, a third L wire, and the N wire. A communication terminal of the controller is connected to a CP wire, and a ground terminal of the controller is connected to the PE wire.

In this implementation, in the three-phase charging pile, the CP wire is arranged in the hollow hole of the PE wire, so that the PE wire not only realizes the grounding function, but also shields the CP wire. The PE wire is reused as the shielding wire, to prevent the CP wire from being interfered when transmitting a signal.

The foregoing content is a further detailed description of the present disclosure with reference to specific preferred implementations, and it should not be considered that the specific implementation of the present disclosure is limited to these descriptions. All equivalent substitutions or obvious variations made by a person of ordinary skill in the art of the present disclosure without departing from the concept of the present disclosure and having the same performance or use should be deemed to fall within the patent protection scope determined by the submitted claims of the present disclosure.

## Claims

1. A charging gun cable, comprising:
a first L wire (11);
an N wire (14);
a PE wire (12), the PE wire (12) being provided with a hollow hole; and
a CP wire (13), the CP wire (13) being located in the hollow hole of the PE wire (12),
wherein the first L wire (11), the N wire (14), and the PE wire (12) are arranged adjacent to each other in pairs.

2. The charging gun cable according to claim 1, wherein the PE wire (12) is a shielding layer of the CP wire (13).

3. The charging gun cable according to claim 2, wherein the PE wire (12) is a metal layer that wraps the CP wire (13).

4. The charging gun cable according to claim 3, wherein the CP wire (13) and the PE wire (12) are coaxially arranged.

5. The charging gun cable according to claim 1, wherein the CP wire (13) extends through the hole on the PE wire (12) and connects to a controller in the charging pile.

6. The charging gun cable according to claim 1, further comprising:
a second L wire (15); and
a third L wire (16),
wherein the first L wire (11), the second L wire (15), the third L wire (16), the N wire (14), and the PE wire (12) are arranged adjacent to each other in sequence.

7. A charging gun, comprising:
a charging gun body; and
a charging gun head, the charging gun head comprising the charging gun cable according to any of claims 1 to 6.

8. A charging pile, comprising a charging pile body (30) and the charging gun (20) according to claim 7.

9. The charging pile according to claim 8, wherein the charging pile is a single-phase charging pile, and the charging pile body (30) comprises:
a switching device (31), the switching device (31) being configured to connect the first L wire (11) and the N wire (14); and
a controller (32), a communication terminal of the controller (32) being connected to the CP wire (13), and a ground terminal of the controller (32) being connected to the PE wire (12).

10. The charging pile according to claim 8, wherein the charging pile is a three-phase charging pile, and the charging pile body (30) comprises:
a switching device (31), the switching device (31) being configured to connect the first L wire (11), the second L wire (15), the third L wire (16), and the N wire (14); and
a controller (32), a communication terminal of the controller (32) being connected to the CP wire (13), and a ground terminal of the controller (32) being connected to the PE wire (12).
